Europäisches Patentamt

European Patent Office

Office européen des brevets

(19)

(11) Publication number: **0 044 652**
**A2**

# (12) EUROPEAN PATENT APPLICATION

(21) Application number: **81303052.5**

(22) Date of filing: **03.07.81**

(51) Int. Cl.³: **B 01 F 5/10**
**B 01 F 5/04**

(30) Priority: **18.07.80 GB 8023644**
**09.03.81 GB 8107264**

(43) Date of publication of application:
**27.01.82 Bulletin 82/4**

(84) Designated Contracting States:
**DE FR GB IT NL**

(71) Applicant: **Moore, Barrett & Redwood Limited**
**Rosscliffe Road Ellesmere Port**
**Wirrall Cheshire(GB)**

(72) Inventor: **Hayward, Alan Thomas Joseph, Dr.**
**107 Landor Road Whitnash**
**Leamington Spa Warwickshire CV31 2LF(GB)**

(74) Representative: **Bannerman, David Gardner et al,**
**Withers & Rogers 4 Dyer's Buildings Holborn**
**London, EC1N 2JT(GB)**

(54) Method and apparatus for blending a fluid.

(57) A method and apparatus for blending a material containing two distinct phases of different densities flowing along a pipe, so that the two phases tend to form accumulations at different levels in horizontal portions of the pipe, the method comprising injecting a fluid into the pipe under pressure, characterised in that the fluid is injected into the pipe (10) with components of motion both radial and tangential to an adjacent portion of the pipe wall, in such a way that it causes both dispersion of the accumulations (11, 12) and rotation of the material around the circumference of the pipe. The invention is particularly applicable in the oil industry.

EP 0 044 652 A2

DGB/JEA                    -1-

## METHOD AND APPARATUS FOR BLENDING A FLUID

This invention concerns a method and apparatus for blending a material containing two distinct phases of different densities flowing along a pipe, so that the two phases tend to form accumulations at different levels in horizontal portions of the pipe, the method comprising injecting a fluid into the pipe under pressure.

The invention is particularly, but by no means exclusively, useful in the oil industry. In the oil industry, crude oil flowing through a pipeline is often metered, for example for the purpose of determining the royalty that has to be paid to the government of the country from which the oil has been taken. As crude oil often contains a considerable amount of water, it is important that the water content be accurately determined so that the royalties to be paid can be adjusted so that no royalty is paid on the water content. Unfortunately, determining the water content accurately is difficult because when crude oil flows in a horizontal pipe much of the water in it tends to settle to the bottom of the pipe.

Thus, if samples to be analysed are taken from the centre of the pipe, the analysis tends to yield too low a value for the water content of the oil in the pipe as a whole.

Known equipment for overcoming this problem is shown diagrammatically in Figure 1, and is the subject of British Patent Application No. 2030963. In this case a portion of the oil flowing through the pipe 1 is withdrawn from it by means of a pump 2 and then injected back into the pipe in the form of a high-velocity jet 3, which enters at the bottom of the pipe. This jet 3 is sufficiently powerful to create enough turbulence for the water and oil in the pipe to be rendered homogeneous so that truly representative samples can be taken. The disadvantage of this sytem is that it requires a very powerful jet which has to be kept operating all the time the oil is being pumped, and this jet consumes a great deal of energy. The present invention enables a similar degree of homogeneity to be achieved with a very much smaller, less powerful, and cheaper form of jet.

According to one aspect, the method of this invention comprises injecting into the pipe a fluid with components of motion both radial and tangential to an adjacent point on the wall of the pipe, in such a way that it causes both localised dispersion of the accumulations of material, and rotation of the material around the axis of the pipe.

The fluid is preferably injected into the pipe so that it impinges on the inside wall of the pipe, the fluid having at the point of impingement a component of motion towards the wall of the pipe and a component tangential to the wall of the pipe, so that the injected fluid tends to cause both localised dispersion of the material in the pipe at the point of impingement and also rotation of said material around the axis of the pipe.

Alternatively, however, the fluid may be injected into the pipe with components of motion both tangential and radial to an adjacent point on the pipe wall but in a direction away from the pipe wall, the injected fluid being arranged to pass into a venturi tube within the pipe so that a portion of the material flowing along the pipe is drawn into the venturi tube.

In both cases, the incoming jet tends to disperse locally any accumulation of one component of the fluid and also to set the material in rotation around the axis of the pipe.

In the latter case, the venturi tube is preferably placed inside the pipe adjacent the wall and with its axis neither radial nor tangential to the adjacent part of the wall.

The portion of the pipe in which blending according to the invention takes place may be horizontal, vertical or inclined.

The fluid injected into the pipe is preferably a portion of the material flowing through the pipe which is withdrawn from the pipe and pressurised before being re-injected. This material is preferably a liquid which, when substantially homogenised, comprises a continuous phase and a dispersed phase, the continuous phase being a liquid and the dispersed phase being one or more other liquids and/or particulate solids and/or gases. For example, the continuous phase may comprise petroleum or a product or derivative thereof, and the dispersed phase water. Where no venturi tube is used the fluid is preferably injected into the pipe in a singe jet, directed towards the wall of the pipe so that it impinges on the wall at an angle other than $90^o$, e.g. an angle inclined at $75^o$ or $70^o$ to the perpendicular. Preferably, the jet is directed towards the wall at a point where the dispersed phase would be expected to settle, so that the jet tends to break up any accumulation of the dispersed phase at that point. Although a single jet as described above would normally be sufficient, two or more such jets may be arranged at locations spaced along the axis of the pipe.

Alternatively, the single jet could be replaced by two or more jets arranged at substantially the same cross-section of the pipe. In this case, one jet could be directed radially towards the pipe wall, and the other directed tangentially to the wall. The radial jet would ensure dispersion of the material at the point of impingement of the jet with the wall, and the tangential jet would cause rotation of the dispersed material around the axis of the pipe.

The apparatus of the invention comprises means for withdrawing a portion of the material from the pipe, a pump for pressurising the material withdrawn from the pipe, and either:

(i)     at least one jet which can be positioned within the pipe so as to re-inject the material withdrawn back into the pipe in such a way that the re-injected material impinges on the wall of the pipe and has components of motion both radially     towards and tangential to the pipe wall at the point of impingement, so that the re-injected material tends to cause both localised dispersion of the material within the pipe at the point of impingement, and also rotation of such material around the axis of the pipe, or

(ii)    at least one jet arranged to re-inject the material withdrawn back into the pipe and into a venturi tube positioned within the pipe substantially coaxial with the jet, so that some of the material in the pipe is drawn into the venturi tube and re-injected in such a way that it has components of motion both radially     away from and tangential to the portion of the pipe wall in which the jet is located, and so tends to become dispersed towards the interior of the pipe and also rotates around the axis of the pipe.

Although in case (i) above it is possible to locate the jet in the wall of the pipe so that it is directed towards a different portion of the wall, it is preferable to install the jet at the end of a length of piping which is inside the pipe, because the jet can then be located closer to the portion of the wall towards which it is to be directed.

According to the invention there is also provided a length of pipe fitted with the apparatus of the invention.

Methods and apparatus embodying the invention will now be described by way of example and with reference to Figure 2 to 6 of the accompanying drawings, in which:

Figure 2 is a partial cross-section of the pipe showing a preferred location for a single fluid-injecting jet,

Figures 3 and 4 are diagrammatic side end elevations, respectively, showing a length of pipe provided with apparatus according to the invention,

Figures 5 and 6 are both partial cross-sections of a pipe showing two different embodiments employing a venturi tube.

In all figures like parts are indicated by like reference numerals.

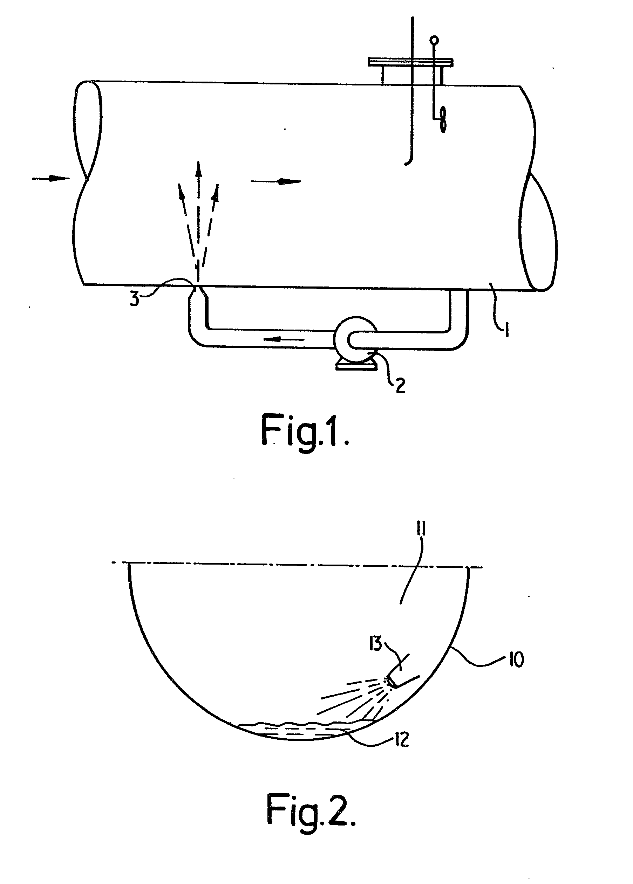

Figure 2 shows the bottom portion of the cross-section of a pipe 10 in which crude petroleum is flowing, from which water 12 has settled out into the bottom of the pipe. The petroleum 11 tends to accumulate above the water 12. Fluid is injected into the pipe from a jet 13 which is located near the bottom of the pipe and is directed towards the wall so that fluid from the jet impinges on the interface between the water and the petroleum at an oblique angle (i.e. so that it has a component of motion towards the interface and a component parallel to the interface) and also on the wall at an angle which is not 90°, and is preferably about 15° to 20° to the tangential. Thus, the accumulated water 12 in the bottom of the pipe is broken up into small droplets by the resulting local turbulence, and is also caused to rotate around the axis of the pipe, thus taking each droplet into suspension within the contents of the pipe as a whole and resulting in a substantially homogeneous mixture within the pipe.

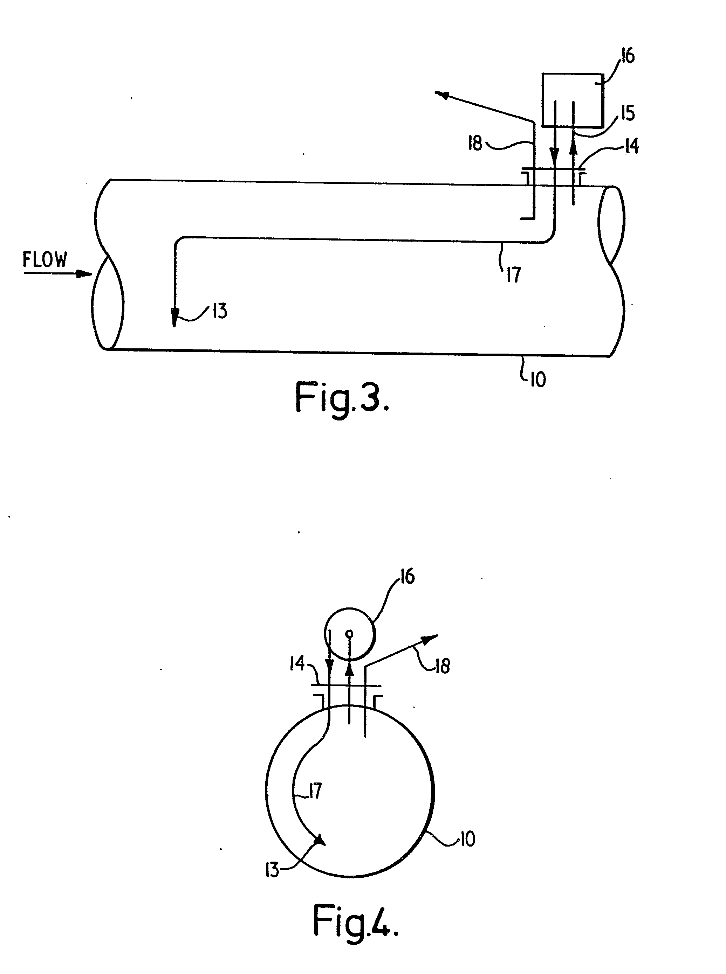

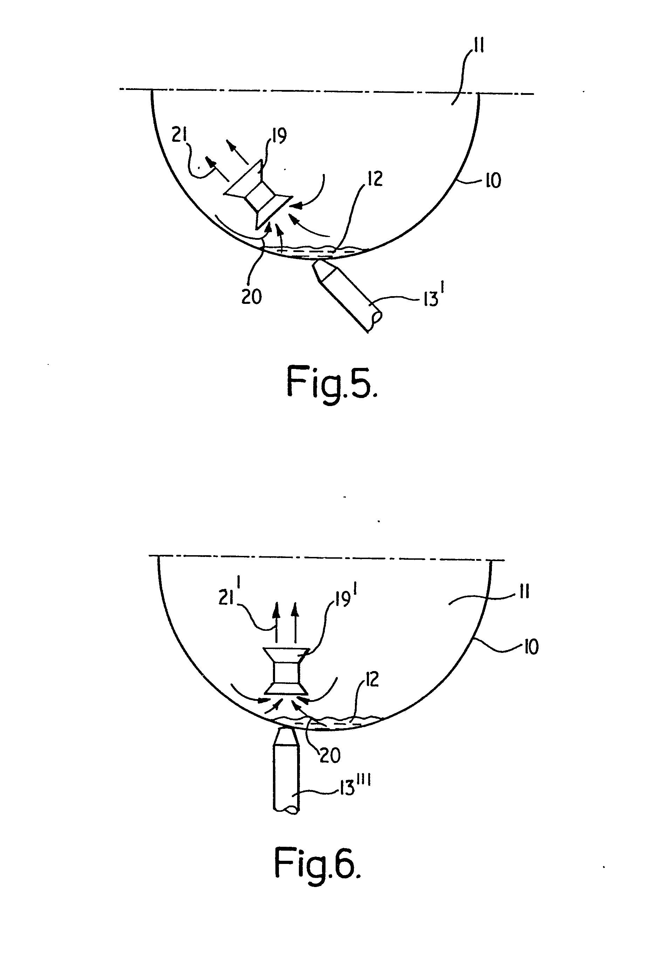

Figures 3 and 4 show a substantially horizontal length of conventional crude oil pipeline 10 provided with axially spaced manholes, one of which is shown at 14. This manhole is used to give access to the interior of the pipe to enable the apparatus of the invention to be fitted. The apparatus comprises a suction tube 15 provided with a pump 16 for withdrawing a small proportion of the oil from the pipe. The pump pressurises this oil and returns it to the pipe via piping 17 which extends inside the pipe 10 to a point substantially upstream of the manhole and terminates in the jet 13.

A sample probe 18 of known type is also fitted via the manhole, for withdrawing small samples of the oil in the pipeline and measuring the water content. It is important for the jet 13 to be sufficiently far upstream of the probe 18 to ensure adequate homogenisation of the oil in the pipeline before it reaches the probe. Because the jet is directed in such a way that it causes both localised dispersion and general rotation of the pipe contents, it provides much more efficient homogenisation than the conventional apparatus shown in Figure 1. Thus, a much less powerful pump can be used. The position of the suction tube relative to the sample tube or the jet is quite immaterial.

5. In Figures 5 and 6 a jet 13' (Fig.5) or 13'' (Fig.6) is arranged to inject fluid into the bottom under pressure, which fluid has previously been drawn off from the pipe in the manner indicated above. In both cases, the jet is directed neither tangentially nor radially with regard to the pipe. The jets 13' and 13'' are coaxial with venturi tubes 19, 19' respectively, located within the pipe 10, so that the fluid from the jet is directed into the associated venturi tube. As a result, fluid including water from the bottom of the pipe is drawn into the venturi tube, as shown by the arrows 20, 20' in Figures 5 and 6 respectively. This tends to cause mixing of some of the oil with any water that has accumulated in the pipe bottom. Blending of the resulting mixture with the remainder of the contents of the pipe is caused by the ejection of the fluid by the venturi with components of motion both towards the interior of the pipe and also tangential to the pipe as shown by arrows 21, 21'. Thus the fluid ejected from the venturi tube tends to be dispersed towards the interior of the pipe while being swirled around the pipe axis.

CLAIMS:

1.      A method for blending a material containing two distinct phases of different densities flowing along a pipe, so that the two phases tend to form accumulations at different levels in horizontal portions of the pipe, the method comprising injecting a fluid into the pipe under pressure, characterised in that the fluid is injected into the pipe (10) with components of motion both radial      and tangential to an adjacent point on the pipe wall, in such a way that it causes both dispersion of the accumulations (11, 12) and rotation of the material around the axis of the pipe.

2.      A method according to Claim 1, characterised in that the fluid is injected into the pipe (10) so that it impinges on the inside wall of the pipe with components of motion both tangential to and radially towards the pipe wall at the point of impingement, and so that the injected fluid tends to cause both localised dispersion of the material in the pipe at or adjacent to the point of impingement and also rotation of said material about the axis of the pipe.

3.      A method according to Claim 1 characterised in that the fluid is injected into the pipe (10) with components of motion both tangential to and radially away from the adjacent portion of the pipe wall, and the injected fluid is arranged to pass into a venturi tube (19, 19') within the pipe (10) so that a portion of the material flowing along the pipe is drawn into the venturi tube.

4.    A method according to any preceding claim, characterised in that the fluid injected into the pipe (10) is a portion of the fluid flowing through the pipe which has been withdrawn and pressurised.

5.    A method according to any preceding claim, characterised in that one phase is substantially more abundant than the other and in that the fluid is injected into pipe (10) at or close to a point where an accumulation (12) of the less abundant phase would be found.

6.    A method according to any preceding claim, characterised in that the material is petroleum or a product or derivative thereof containing a minor proportion of water.

7.    Apparatus for blending a material containing two distinct phases of different densities flowing along a pipe so that the two phases tend to form accumulations at different levels in horizontal portions of the pipe, characterised by means (2) for withdrawing a portion of the material from the pipe (10) and for pressurising the withdrawn material, and either:

(1)     at least one jet (13) which can be positioned within the pipe (10) so as to re-inject the withdrawn material back into the pipe (10) in such a way that the re-injected material impinges on the wall of the pipe (10) and has components of motion both radially towards and tangential to the wall of the pipe (10) at the point of impingement, so that the re-injected material tends to cause both localised dispersion of the material within the pipe (10) at or adjacent to the point of impingement, and also rotation of such material around the axis of the pipe (10), or

(ii)     at least one jet (13', 13'') arranged to re-inject the withdrawn material back into the pipe (10) and into a venturi tube (19, 19') positioned within the pipe and coaxial with the jet (13', 13'') so that some of the material in the pipe (10) is drawn into the venturi tube (19, 19') and re-injected in such a way that it has components of motion both perpendicularly away from and tangential to the portion of the pipe wall within which the jet (13', 13'') is located, and so tends to become dispersed towards the interior of the pipe (10) and also rotates around the axis of the pipe.

8.     A length of pipe characterised in that it includes apparatus according to Claim 7.

Fig.1.

Fig.2.

FLOW

Fig.3.

Fig.4.

Fig.5.

Fig.6.